# EUROPEAN PATENT APPLICATION

(11) **EP 1 477 336 A1**
(43) Date of publication of application: **17.11.2004**
(21) Application number: 04011279.9
(22) Date of filing: 12.05.2004
(51) Int. Cl.: B60C 23/04

(54) **Tire pressure detecting device**

(30) Priority: 16.05.2003 JP 2003138509
(71) Applicant: Omron Corporation, Kyoto-shi, Kyoto 600-8530 (JP)
(72) Inventor: Yamashita, Shuji Omron Corporation, Shimogyo-ku Kyoto-shi Kyoto 600-8530 (JP); Fujii, Masaki Omron Corporation, Shimogyo-ku Kyoto-shi Kyoto 600-8530 (JP)
(74) Representative: Kilian, Helmut, Dr.

(57) **Abstract**

To provide a tire pressure detecting device in which there is no need to perform changing operation of registration information at each time when switching summer tires to winter tires and the like. A tire pressure detecting device includes sensor units (8-12) mounted within wheels of tires (6) of a vehicle for detecting pressure of the tires and wirelessly transmitting information on the detected pressure and predetermined identification information; and a monitoring unit (13) for receiving. transmitted signals from the sensor units (8-12), and, when identification information included in the signals matches the reference information that has been held in advance, determines whether or not the information of the detected pressure included in the signals falls within a normal range, and, if the information does not fall within the normal range, issues a warning, and the characteristic point thereof is in that the identification information and the reference information are information unique to the vehicle (vehicle ID).

## Description

### BACKGROUND OF THE INVENTION

### Field of the Invention

The present invention relates to a tire pressure detecting device for a vehicle such as an automobile, and specifically, to a device capable of detecting tire pressure not only when parked, but also during traveling.

### Description of the Related Art

Generally, as a tire of a vehicle such as an automobile (hereinafter, simply referred to as "vehicle"), a tire filled with gas (air, nitrogen gas, or the like) is used except for special application. The tire is represented by "a pneumatic tire" in this specification, and then, the tire exerts its original performance only after it is incorporated into a wheel and further filled with a proper amount of air. The pressure check is a basic of basics of vehicle management.

Improper pressure causes an insufficient contact area, uneven wear etc. , and leads to poor fuel economy, and further, becomes a destabilizing factor during high speed traveling. On this account, in the start-up inspection before traveling, pressure check using a measuring instrument such as a pneumatic gauge is performed. However, this checking method is performed by pressing the measuring instrument against an air valve of the tire and reading the indication of the gauge, and the check can be performed only when the tire does not rotate, that is, only on parked vehicles.

Tire pressure has temperature dependency, and, even if the pressure is proper before traveling, when tire temperature rises due to high speed traveling for a long time, the pressure rises with the temperature, and, in some cases, departs from the proper range. By the above described check method, such pressure change during traveling can not be detected at all.

Correspondingly, a tire pressure detecting device arranged so as to detect tire pressure continuously (or cyclically) not only when parked, but during traveling and issue a warning to a driver etc. when improper pressure is detected is known (For example, see Japanese Patent No. 3061047, specifically, paragraphs [0009] to [0017] and Fig. 1).

This device includes plural number (in this case, five) of sensor units mounted within respective tire wheels of respective tires (a left front tire, a right front tire, a left rear tire, and a right rear tire) and a spare tire mounted to the vehicle, and one monitoring unit mounted to the vehicle body. Each sensor unit has a tire pressure sensor, a non-volatile memory, and a transmitting circuit, and transmits detection information of the tire pressure sensor (hereinafter, referred to as pressure information) and tire identification information that has been stored in advance in the non-volatile memory together from the transmitting circuit to the monitoring unit on radio waves.

On the other hand, the monitoring unit has a receiving circuit, a non-volatile memory, and a warning circuit, and receives the radio waves from the respective sensor units by the receiving circuit to reproduce the pressure information and the tire identification information. In the case where the tire identification information matches reference tire identification information that has been stored in advance in the non-volatile memory, the unit judges that the signal is from the sensor unit of the vehicle of interest, and determines whether the pressure information is in a proper range or not, and, if it is out of the proper range, drives the warning circuit to announce pressure abnormal.

Here, the tire identification information (in the patent No. 3061047, referred to as "tire identification sign ID") is unique information allocated to the respective tires of the vehicle, specifically, information representing the respective tire positions (the left front tire, the right front tire, the left rear tire, the right rear tire, the spare tire). Now, assuming that the tire identification information of a certain vehicle is A (the left front tire) , B (the right front tire) , C (the left rear tire), D (the right rear tire), and E (the spare tire) for convenience, in storage areas with respect to each tire positions of the non-volatile memory of the monitoring unit, corresponding identification information (A to E) has been stored in advance.

The monitoring unit judges that a signal is pressure information of the tire of the vehicle of interest only when the unit receives the signal including any one of the identification information (A to E). Thereby, for example, erroneous reception of pressure information from a tire of an adjacent vehicle can be prevented.

However, in the conventional tire pressure detecting device, since a system in which unique identification information (tire identification sign ID) representing tire positions is allocated to the sensor units of the respective tires, and storage areas with respect to each tire position are ensured in the non-volatile memory of the monitoring unit and the tire identification information corresponding to the respective tire positions are stored in the storage areas is adopted, changing operation of registered information should be performed at each time when switching from summer tires to winter tires, for example, and there are problems that the operation is troublesome and, if the changing operation is failed, normal pressure detection and a warning action can not be expected.

That is, in the case of assuming that the relationship between tire positions and tire identification information is as follows:
Left front tire → A
Right front tire → B
Left rear tire → C
Right rear tire → D
Spare tire → E
the following relationship has been stored in the monitoring unit.
Left front tire storage area → A
Right front tire storage area → B
Left rear tire storage area → C
Right rear tire storage area → D
Spare tire storage area → E
However, when switching to winter tires, for example, assuming that the relationship between the winter tires and tire identification information after switching is as follows:
Left front tire → A'
Right front tire → B'
Left rear tire → C'
Right rear tire → D'
the stored information in the monitoring unit should be changed to the following information
Left front tire storage area → A'
Right front tire storage area → B'
Left rear tire storage area → C'
Right rear tire storage area → D'

There is a problem that, if the changing operation of the registered information is failed, pressure information from the respective tires after switching is misjudged as being information from another vehicle, and the warning function does not work at all.

Accordingly, the invention is objected to provide a tire pressure detecting device in which changing operation of registered information is not required at each time when switching from summer tires to winter tires.

### SUMMARY OF THE INVENTION

A tire pressure detecting device according to the invention is applied to a tire pressure detecting device including: a sensor unit mounted within a wheel of a tire of a vehicle for detecting pressure of the tire and wirelessly transmitting information on the detected pressure and predetermined identification information; and a monitoring unit for receiving a transmitted signal from the sensor unit, and, when identification information included in the signal matches the reference information that has been held in advance, determines whether or not the information of the detected pressure included in the signal falls within a normal range, and, if the information does not fall within the normal range, issues a warning, and the characteristic point thereof is in that the identification information and the reference information are information unique to the vehicle (vehicle ID).

In this invention, assuming that the number of tires mounted on the vehicle or equipped with by the vehicle is five, for example, the same number of sensor units are provided, and the same information (vehicle ID) is registered in the five sensor units and the monitoring unit, respectively. Further, with respect to a tire having a potential to be mounted to the vehicle (for example, a winter tire etc.) , when a wheel is set in the tire, the same information as above (vehicle ID) is also registered in the winter tire etc.

Therefore, since, even when switching from the summer tire to the winter tire (or vice versa) , there is no need to change the information that has been registered in the respective sensor units, the user of the vehicle is relieved of troublesome registration operation.

### BRIEF DESCRIPTION OF THE DRAWINGS

Fig. 1 is a schematically constitutional diagram of a tire pressure detecting device in an embodiment.
Figs. 2A and 2B show a flowchart when registering a vehicle ID in a monitoring unit 13 and a flowchart when registering a tire ID in each of the sensor units 8 to 12.
Figs. 3A and 3B show a flowchart of pressure detection processing executed in each of the sensor units 8 to 12 and a flowchart of pressure abnormal determination processing executed in the monitoring unit 13.
Figs. 4A to 4C are schematic diagrams showing several specific examples of a unique information registration part 18 of the sensor units 8 to 12 and a unique information registration unit 24 of the monitoring part 13.

### DETAILED DESCRIPTION OF THE INVENTION

Hereinafter, an embodiment of the invention will be described according to the drawings. Note that it is clearly seen that exemplifications of various detailed specifications, practical examples, and numerical values, character strings and other signs are nothing but references for making the idea of the invention clear, and the idea of the invention is not limited by all or a part of them. Further, detailed description of known methods, known procedures, known architectures, known circuit configurations, etc. (hereinafter, referred to as "known matters") is avoided, however, this is also for simplicity of description, and not for intentional exclusion of all or a part of these known matters. Since such known matters are known to those skilled in the art at the time of application of the invention, they are naturally included in the following description.

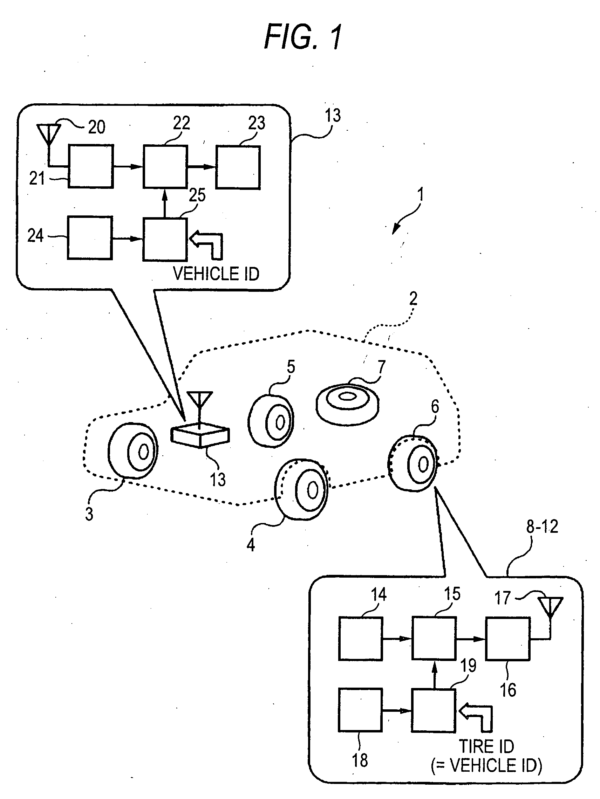

Fig. 1 is a schematically constitutional diagram of a tire pressure detecting device in this embodiment, and the shown tire pressure detecting device 1 has plural number (five in this case) of sensor units 8 to 12 mounted within respective wheels of respective tires (here, a right front tire 3, a left front tire 4, a right rear tire 5, and a left rear tire 6) and a spare tire 7 of a vehicle 2, and has one monitoring unit 13 mounted in an arbitrary position of the vehicle 2.

The respective sensor units 8 to 12 have the same constitution. For example, explaining with the sensor unit 11 for the left rear tire 6 as a representative, this sensor unit 11 includes a tire pressure sensor 14, a transmission information generating part 15, a transmitting circuit 16, a transmitting antenna 17, a unique information registration part 18, and a unique information storage part 19.

The tire pressure sensor 14 consists of a pressure sensor such as a bellows switch, a diaphragm switch, or a pressure switch, and generates an electrical signal (hereinafter, referred to as "pressure information") corresponding to tire pressure. The pressure information may be information representing tire pressure or other information correlated with the tire pressure. Alternatively, the pressure information may includes values that change in an analog manner, or values that changes in a discrete manner, according to the variation of tire pressure.

The transmission information generating part 15 generates transmission information by shaping the pressure information and a tire ID, which will be described later, in a predetermined format, and the transmitting circuit 16 modulates the transmission information to a high frequency signal having a predetermined frequency and emits it from the transmitting antenna 17 in the air.

Here, the unique information storage part 19 consists of, for example, a non-volatile semiconductor memory or the like, and stores the tire ID that has been input in advance from the unique information registration part 18 in a non-volatile manner. The tire ID is the same as a unique identification sign (a vehicle ID, which will be described later) of the vehicle 2. The device of the embodiment is different from the conventional example (tire identification sign ID) in the point where the same tire ID is allocated to all of the sensor units 8 to 12 mounted to the vehicle. That is, the tire identification sign ID of the conventional example is unique information allocated for identifying the respective tires including the spare tire of the vehicle, and, for example, assuming that the respective tire positions are positions of a right front tire, a left front tire, a right rear tire, a left rear tire, and a spare tire, different information such as "left front tire → A", "right front tire → B", "left rear tire → C", "right rear tire → D", and "spare tire → E" is allocated, however, using "tire ID" of the embodiment, the same information (for example, the tire ID = F) is allocated to the respective right front tire, left front tire, right rear tire, and left rear tire, and spare tire.

On the other hand, the monitoring unit 13 includes a receiving antenna 20, a receiving circuit 21, a pressure monitoring part 22, a warning part 23, a unique information registration part 24, and a unique information storage part 25.

The receiving circuit 21 demodulates a base band signal from the high frequency signal received by the receiving antenna 20, compares the tire ID included in the base band signal with the vehicle ID (using F for convenience) that has been stored in advance in the unique information storage part, 25, in the case where they match with each other, judges that the signal is a signal from the sensor units 8 to 12 of the vehicle of interest (vehicle 2) , and determines whether or not the pressure information included in the base band signal departs from the defined range. Then, if the information departs from the defined range, the monitoring unit activates the warning part 23 to perform warning operation of pressure abnormal such as lighting a lamp or sounding a buzzer.

Here, the unique information storage part 25 consists of, for example, a non-volatile semiconductor memory or the like, and stores the vehicle ID (the unique identification sign of the vehicle 2 → F) that has been input in advance from the unique information registration part 24 in a non-volatile manner.

Now, as described above, the tire ID is the same (F) as the unique identification sign (the vehicle ID) of the vehicle 2. The vehicle ID is information for performing individual identification of all vehicles (or all vehicles that have potentials to travel the same area) , and such vehicle ID may be formed, for example, by combining an identification sign with respect to each manufacturer and a vehicle type sign or a serial number within the vehicle type, or unique information used in another system equipped with by the vehicle may be diverted for the vehicle ID. For example, in a keyless entry system or a smart entry system for remote control operation of the vehicle door lock and unlock, information for identifying a portable device of the system (a portable device ID) is held, and this portable device ID can be diverted for the vehicle ID because it is unique information in consideration of antitheft.

Next, operation of the tire pressure detecting device in the embodiment will be described.

### <Vehicle ID Registration>

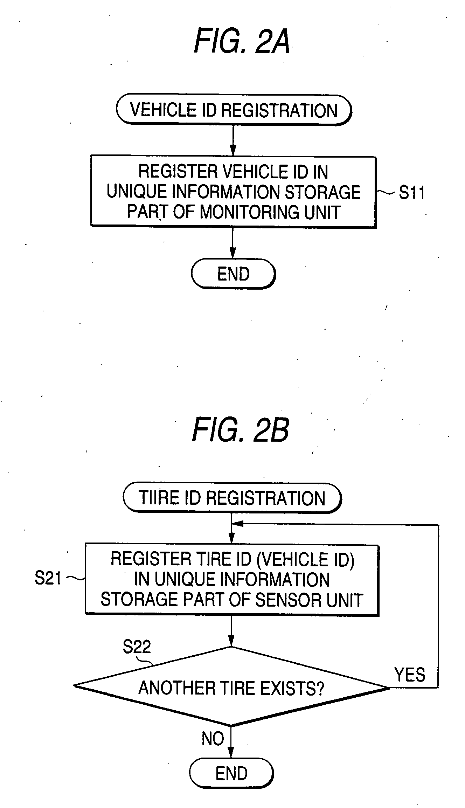

Fig. 2A shows a flowchart when registering a vehicle ID in the monitoring unit 13. This flowchart is executed when the monitoring unit 13 is mounted to the vehicle 2. When the flowchart is executed, the monitoring unit 13 captures the vehicle ID (the unique identification sign of the vehicle 2 = F) that has been input from the unique information registration part 24 by the operator, writes the vehicle ID in the unique information storage part 25, and stores it in a non-volatile manner (step S11) , and then, ends the flowchart. Generally, mounting of the monitoring unit 13 is performed in a manufacturing process of the vehicle 2, maintenance shop, or the like. Accordingly, the user of the vehicle 2 is not involved in the registration operation of the vehicle ID.

### <Tire ID Registration>

Fig. 2B shows a flowchart when registering a tire ID in each of the sensor units 8 to 12. This flowchart is executed when the tires incorporating the sensor units 8 to 12 are mounted to the vehicle 2, taken in as a spare tire, or prepared as a tire to be mounted (for example, as a winter tire) on the vehicle 2. That is, when the flowchart is executed, the sensor units 8 to 12 capture the tire ID (same as the vehicle ID, i.e. , "F") that has been input from the unique information registration part 18 by the operator, writes the tire ID in the unique information storage part 19, and stores it in a non-volatile manner (step S21), and then, determines whether or not there is another tire in which the tire ID should be registered (step S22) and, if there is another tire, repeats the step S21, on the other hand, if there is no other tire, ends the flowchart.

Here, the number of tires mounted and equipped with is n + 1 (n is the number of traveling tires of the vehicle) including a spare tire. Since a typical example of a passenger car etc. is five (n = 4), and the number of tires of the vehicle 2 is also five (the right front tire 3, the left front tire 4, the right rear tire 5, the left rear tire 6, and the spare tire 7), the above described "tire ID registration operation" is repeated five times. Generally, mounting of the five tires (equipment in the case of the spare tires 7) on the vehicle 2 is performed in the manufacturing process of the vehicle 2, and therefore, the first "tire ID registration operation" is performed in the manufacturing process of the vehicle 2, and the user of the vehicle 2 is not involved in the registration operation.

Now, in the case where the vehicle 2 is used in a snow-covered area, the summer tires should be switched to the winter tires. The summer tire refers to a tire other than a winter tire such as a studless tire. Alternatively, the summer tire is also referred to as "normal tire". The normal tire includes an all-weather tire.

When the summer tire is switched to the winter tire (or vice versa) , there are two cases where the tire only is changed with the wheel used commonly, and summer and winter sets (tire plus wheel) are prepared. In the former case, since the number of wheels is not changed, only the first "tire ID registration operation" may be performed, however, in the case where the summer and winter sets are prepared, "tire ID registration operation" should be performed with respect to each of the sets.

Normally, the summer tire set is standard equipment (mounted in the manufacturing process) of the vehicle 2, and, as the winter tire set, an optional set of the vehicle 2 or commercial products can be selected, however, the commercial products that do not incorporate the sensor units 8 to 12 are unusable because pressure detection can not be performed. On this account, as the winter tire set, the optional products of the vehicle 2 is used. That is, since the winter tire set is also acquired via a dealer of the vehicle 2, "tire ID registration operation" in the winter tire set is naturally performed in a maintenance shop of the dealer and the like, and consequently, the user is not involved in the registration operation, either.

### <Pressure Detection Processing>

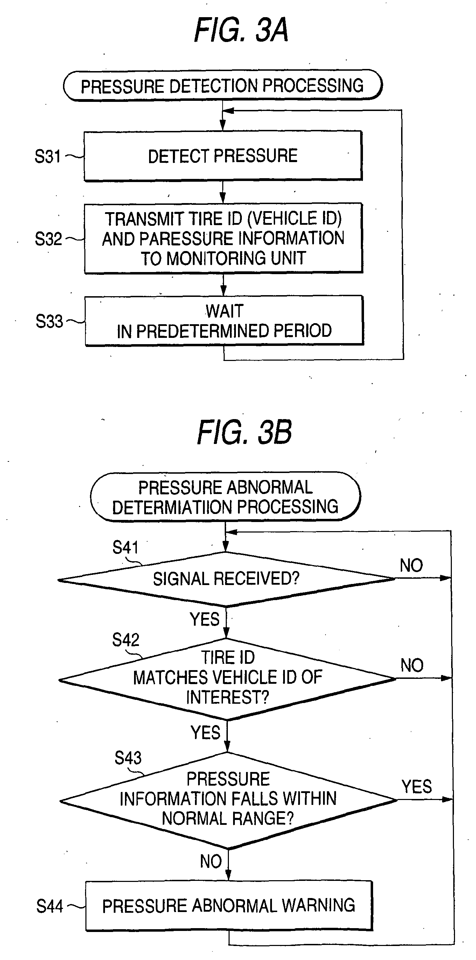

Fig. 3A shows a flowchart of pressure detection processing executed in each of the sensor units 8 to 12. The flowchart is executed repeatedly in a predetermined cycle. That is, when the flowchart is executed, each of the sensor units 8 to 12 first detects pressure (step S31), transmits information of the detected pressure (pressure information) and the tire ID (= F) that has been stored in the unique information storage part 19 to the monitoring unit 13 (step S32) , and then, after waiting in a predetermined period (step S33), executes the steps from the step S31 on down repeatedly.

### <Pressure Abnormal Determination processing>

Fig. 3B shows a flowchart of pressure abnormal determination processing executed in the monitoring unit 13. In the flowchart, first, whether or not a signal from the sensor units 8 to 12 is received is determined (step S41), and, if the signal is received, the match between the tire ID included in the signal and the vehicle ID that has been stored in the unique information storage part 25 is determined (step S42) . Then, if there is a mismatch between them, the signal is judged as being a signal from an adjacent vehicle, for example, returning to the step S41, and, if there is a match between them, the signal is judged as being a signal from the sensor units 8 to 12 of the vehicle of interest (vehicle 2) , and whether or not the pressure information included in the signal falls within the predetermined range is determined (step S43). Then, if the signal falls within the predetermined range, returning to the step S41, and if the signal departs from the predetermined range, the monitoring unit judges as being pressure abnormal and activates the warning part 23 to generate a necessary warning (step S44).

### <Summary>

Since constituted as described above, according to the tire pressure detecting device 1 of the embodiment, the following advantages can be obtained.
(1) Pressure detection: Each of the sensor units 8 to 12 mounted on the wheels of the respective tires (the right front tire 3, the left front tire 4, the right rear tire 5, the left rear tire 6, and the spare tire 7) of the vehicle 2 detects the pressure of the tire on which the unit is mounted continuously or cyclically, and transmits the pressure information and the tire ID to the monitoring unit 13. Therefore, pressure of each tire can be continued to be detected not only when the vehicle is parked, but also during traveling.
(2) Pressure abnormal determination: When the monitoring unit 13 mounted on the vehicle 2 receives the signal from each of the sensor units 8 to 12, the monitoring unit determines the match between the tire ID included in the signal and the vehicle ID of the vehicle of interest, and, if there is a match between them, the signal is judged as being a signal from the sensor units 8 to 12 of the vehicle of interest, and abnormal of pressure information included in the signal is determined. Therefore, not only when parked, but also during traveling, a suitable pressure abnormal warning is issued to the driver and the like, and, for example, with respect to the signal from the sensor units 8 to 12 of the adjacent vehicle, the tire ID included in the signal does not match the vehicle ID of the vehicle of interest, and thereby, the signal can be excluded as an error signal, and there is no need to worry about a wrong abnormal warning.
(3) Registration operation of tire ID etc.: As known from the following description (i) to (iii) , the user of the vehicle 2 is not involved in the registration operation. Therefore, an especially effective advantage that the user is relieved of troublesome registration operation is obtained.
   (i) First, registration of tire IDs in the sensor units 8 to 12 of the tires that has been mounted initially on the vehicle 2 is performed in the manufacturing stage of the vehicle 2. Therefore, the user of the vehicle 2 is not involved in the registration operation.
   (ii) Further, as the winter tire set, not the commercial products, but optional products (optional products of the vehicle 2) in which the sensor units 8 to 12 are mounted is used. Therefore, since registration of tire IDs in the sensor units 8 to 12 of the winter tire set is performed in the maintenance shop of the dealer and the like of the vehicle 2, the user is not involved in the registration operation, either.
   (iii) In addition, when switching from the summer tire to the winter tire or switching vice versa, the registration of tire IDs in the sensor units 8 to 12 of the respective tires is not required. This is because all of the tire IDs that have been registered in the sensor units 8 to 12 are the same (vehicle ID).

### <Other>

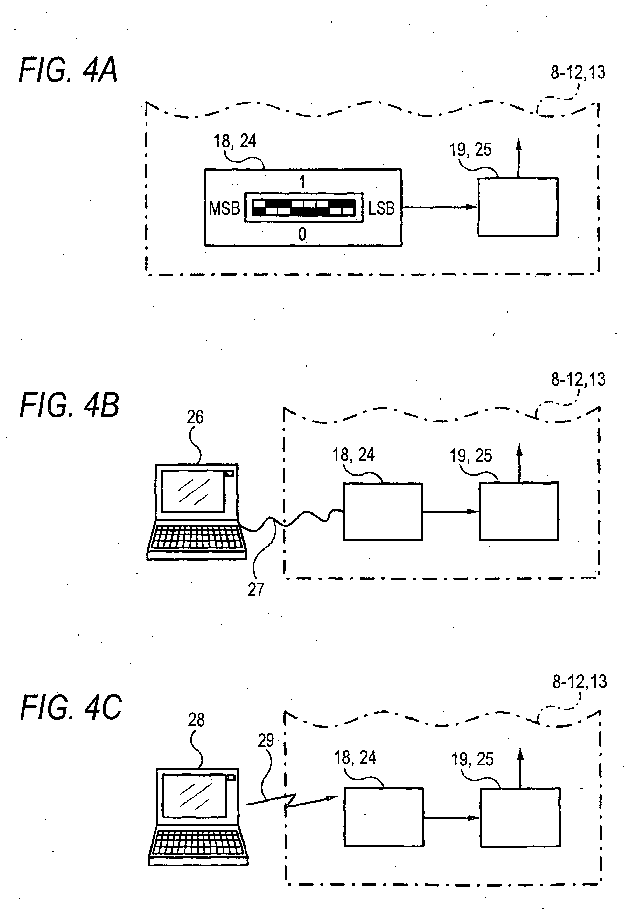

Figs. 4A to 4C are schematic diagrams showing several specific examples of the unique information registration part 18 of the sensor units 8 to 12 and the unique information registration part 24 of the monitoring unit 13. Fig. 4A shows an example of using a manual switch such as a dip switch. That is, assuming that the shown unique information registration part 18 and the unique information registration part 24 are, for example, constituted by a dip switch of 8-bit, and black color of each bit represents "0" and white color represents "1", in the shown example, the bit string from MSB toward LSB is set to "01100011". Since this setting represents "99" in decimal notation, in this case, common "99" is stored as the tire ID or vehicle ID in the unique information storage part 19 of the sensor units 8 to 12 or the unique information storage part 25 of the monitoring unit 13.

Further, Fig. 4B shows an example of using an external ID registration device in wired connection. The ID registration device 26 is a personal computer, for example, and this ID registration device 26 and the unique information registration part 18 or the unique information registration part 24 are connected arbitrarily using a general purpose interface cable 27 such as an RS 232C and a USB. In this case, the unique information registration part 18 or the unique information registration part 24 functions as an input/output part of a general purpose interface.

In addition, Fig. 4C shows an example of using an external ID registration device in wireless connection. The ID registration device 28 is a personal computer, for example, and this ID registration device 28 and the unique information registration part 18 or the unique information registration part 24 are wirelessly connected arbitrarily using a medium 29 such as wireless LAN and infrared rays. In this case, the unique information registration part 18 or the unique information registration part 24 functions as a receiving part of the medium 29.

According to the invention, assuming that the number of tires mounted on the vehicle or equipped with by the vehicle is five, for example, the same number of sensor units are provided, and the same information (vehicle ID) is registered in the five sensor units and the monitoring unit, respectively. Further, with respect to a tire having a potential to be mounted to the vehicle (for example, a winter tire etc.) , when a wheel is set in the tire, the same information as above (vehicle ID) is also registered in the winter tire etc.

Therefore, since, when switching from the summer tire to the winter tire (or vice versa) , there is no need to change the information (vehicle ID) that has been registered in the respective sensor units, the user of the vehicle is relieved of troublesome registration operation.

## Claims

1. A tire pressure detecting device comprising:
a sensor unit mounted within a wheel of a tire of a vehicle for detecting pressure of the tire and wirelessly transmitting information on the detected pressure and predetermined identification information; and
a monitoring unit for receiving a transmitted signal from the sensor unit, and, when identification information included in the signal matches the reference information that has been held in advance, determines whether or not the information of the detected pressure included in the signal falls within a normal range, and, if the information does not fall within the normal range, issues a warning,
wherein said identification information and said reference information are information unique to said vehicle.
